Europäisches Patentamt

European Patent Office

Office européen des brevets

(11) Publication number: **0 471 132 A1**

# EUROPEAN PATENT APPLICATION

(21) Application number: **90830375.3**

(22) Date of filing: **13.08.90**

(51) Int. Cl.⁵: **C04B 18/02**, C02F 11/14

(43) Date of publication of application:
**19.02.92 Bulletin 92/08**

(84) Designated Contracting States:
**AT BE CH DE DK ES FR GB GR IT LI LU NL SE**

(71) Applicant: **SOCIETA MERIDIONALE ARGILLE ESPANSE S.P.A**
**C.da Difesa Grande, 82**
**I-83031 Ariano Irpino (AV)(IT)**
Applicant: **OMNIA ECOLOGIA S.R.L.**
**Via Regina Elena, 30**
**I-65100 Pescara(IT)**

(72) Inventor: **Ronzoni, Leopoldo**
**Via Latina, 100**
**I-00034 Colleferro(IT)**
Inventor: **Benigni, Gianluigi**
**Strada Provinciale San Silvestro 73**
**I-65100 Pescara(IT)**
Inventor: **La Rovere, Giuseppe**
**Salita San Francesco, 13**
**I-66023 Francavilla al Mare(IT)**

(74) Representative: **Taliercio, Antonio et al**
**ING. BARZANO' & ZANARDO ROMA S.p.A.**
**Via Piemonte, 26**
**I-00187 Roma(IT)**

(54) **A thermic lithosynthesis process for disposal of liquid and solid industrial wastes.**

(57) A thermic lithosynthesis process for disposal of liquid and solid industrial wastes in the production of inert clay agglomerates, consisting of a cold working step comprising:
milling of clay into granules, mixing said clay granulates with liquid and/or industrial wastes, such as oil raffinery sludges, organic substances, exhausted and emulsioned oils etc., laminating and maturing said mixture to obtain a homogeneous paste and a warm working step comprising: heating said paste by burners with conventional fuels to evaporate the water content and to obtain a granular material, heating said granular material by burners fed with conventional fuels and/or by exhausted and/or emulsioned oils to expand the inner portion of granules and obtain a glassy outer layer thereof, cooling said expanded granules to attain clay agglomerates adapted for manufacturing cements and concretes.

EP 0 471 132 A1

The present invention relates to a thermic lithosynthesis process for disposal of liquid or solid industrial wastes.

As it is well-known, the necessity of disposal of industrial wastes, such as f.i. vegetation waters from olive mills, oil refinery slashes, emulsified oils, exhausted oils etc. continues to create a great ecological and economic problem.

Thus, it is an object of the present invention to solve this problem in a most economic way.

It has been surprisingly found that said industrial wastes may be easily mixed with clay to form a homogeneous paste and submitted to a thermical process for evaporating the water content and burning the organic components.

It is known that clayish minerals consist of silicates and silicon alluminates which have a stratified lattice structure and which, owing to these open structures, may incorporate a plurality of chemical species. The spaces existing between the layers may be occupied by water molecules, by cations or by organic molecules which are easily adsorbed. A plurality of oxydriles may be replaced by several different aniones, whereas a plurality of cations may be retained by the clay owing to exchange actions.

When clay is subjected to heating, it occurs initially the loss of the adsorbed waters, then the loss of the interlayed water and finally the loss of the constitution water. A further heating causes the demolition of the clay structure, which demolition occurs in a temperature range from 800 to 900° C.

Instead of a static heating, the clay may be conveyed into a rotary kiln and submitted to a heating by fumes coming from a suitable burner. Thus, the clay granules are submitted to a sharp increase of temperature, which causes the conversion of the outer layer into a plastic phase with a successive formation of the outer glassy layer. Owing to a low thermal conductivity of the material, between this layer and the inner portion of the granules it exists a temperature gradient which hinders the inner mass to melt.

Contemporaneously with these status passages, it occurs the evaporation of the water, the decomposition of the carbonates and the combustion of the organic substances. Said processes cause the clay to expand. A successive rapid cooling stabilizes the structure of the clay granules and causes the formation of a hard outer layer, which has a glassy consistence and is water proof.

It has been now surprisingly found that the above said structure of the clays may be advantageously used for wasting the industrial solid and liquid refuses.

In effect, it has been discovered that:
i) at low temperatures the clays have a great affinity with respect to a plurality of organic substances and, moreover, their capacity of exchange allows to fix a large number of cations;
ii) at high temperatures it is possible to fix metal ions which do not belong to the original clay structure, by both the substitution of lattice ions and formation of new crystalline compounds and solid solutions;
iii) the swelling of the final product having a low volume mass obtained by the above said process owing to a quick temperature increase, is much greater when the clays are mixed with material having a high content of organic substances.

It has been tested that materials to be submitted to the thermic process assures optimal conditions when it has a moisture content of about 25% and a content of organic carbon of about 0.5%. The contents of both the water and organic substances are indispensable, since their conversion into gas at a high temperature causes the formation of both the porous inner structure and glassy outer layer.

The necessity to add to the clays the requested amounts of water and organic carbon was the base from which starts the idea to introduce into the technological process refuse liquids, several kinds of sludges and toxic and hurtful refuses etc.

It is thus a further object of the present invention to obtain a final granular product which is chemically inert and may be advantageously used as a lightweight aggregate for concretes and cements.

The lithosynthesis process according to the invention consists of the following steps:
1. cold working:
    i) milling the clay;
    ii) mixing the clay granules with refuse products of several kinds;
    iii) lamination and maturation of the mixture to obtain a homogeneous material;
2. warm working:
    i) drying;
    ii) heating;
    iii) cooling.

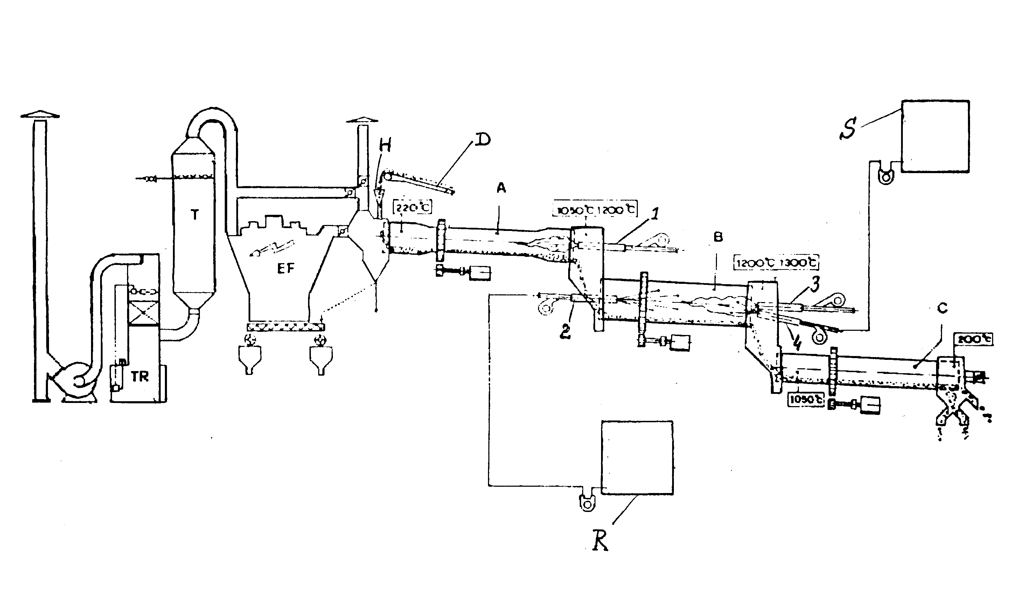

The warm working is preferably performed within a known rotary kiln consisting of three separate sections having a total length of about 60 m, which is diagrammatically shown in the enclosed drawing.

The process according to the present invention will be now disclosed with reference to said drawing.

It may be seen that there are three possibilities of introducing the waste materials in dependance on their chemical and physical characteristics; namely: mixing the clay with waste liquid, burning the waste liquids, such as waste oils by a first and a second burner.

The clay, is mixed with the waste liquids having a high value of COD (amount of oxygen available for bacteries) or sludges with prevailingly inorganic content or oil emulsions and introduced into the first kiln A by a conveyor D through a hopper H. The addition of the waste materials is to be valued in dependance on their contribution to the above indicated percentages of water and organic materials. The content of the inorganic material which may be added to the clay depends on its specific composition and is estimated in 10-20% for a prevailingly siliceous material.

Within the kiln A the mixture of clay and waste material is dried by a burner 1 actuated by conventional fuels, such as f.i. methane. The dried material in form of granules is discharged at a temperature of 1050-1200˚C into the second rotary kiln B,in which the expansion of the granules and forming of the above said glassy outer layer occur. The expansion kiln B is heated by three burners, namely by a burner 2 actuated by exhausted and/or emulsioned oils from a tank R, a burner 3 actuated by conventional fuels, such as f.i. methane and coal and by a third burner 4, which introduces into the flame of the burner 3 waste liquids having an appreciable calorific power, such as exhausted and/or emulsioned oils from a tank S. The burners 2 and 4 not only burn the waste oils, but allow the evaporation and combustion of the volatile species as well as a final combustion of organic species.

The introduction into the flame allows the combustion of any compound and since the combustion and the flow of the combustion products occurs in countercurrent to the flow of solid materials, this last acts as an adsorbent bed, so that a possible unburnt material is returned to the kiln zone having a higher temperature;
The granules expanded in the kiln B are introduced at a temperature of about 1200-1300˚C into a rotary cooling kiln C (cooler) from which are discharged at a temperature of about 200˚C, cooled to the room temperature and conveyed to the production of cements and concretes.

The plant is provided also with an electro-filter EF for purifying the fumes of the kilns, a washing tower T for fumes and a water conditioner TR.

It is particularly important for the process the possibility of employing the exhausted oils both as additive of clays for obtaining the carbon necessary for the expansion step and auxiliary fuel together with the conventional one. This allows to utilize the calorific power of these products in a rational way from the ecological point of view, in as much as the combustion products are not discharged into the atmosphere, but pass through the entire high temperature zone of the kiln and the inorganic species are largely fixed by the material passing through the kiln. In the process of the invention there may be employed fuels obtained from the refuses (RFD = refuse derived fuels), fuels for which up to-date no satisfactory use has been found. Thus, RFD may be employed for supplying the organic carbon necessary for the expansion of the clay and as auxiliary fuel together with the conventional fuels. The solid wastes of prevailingly inorganic type may be incorporated in a concentration of about 10% and since the plant of the above disclosed kind treat a clay quantity of about 400-500 tons/day, it is possible to dispose about 40-50 tons/day of solid wastes.

A corresponding quantity of liquid wastes may be introduced into the process, because the moisture content of the clay for preparing the clay for the laminating step requires the addition of 10% in weight of water. Thus, likely about 40-50 tons/day of liquid wastes may be disposed.

From the above disclosure, it clearly results the great importance of the process according to the present invention for the disposal of liquid and solid wastes in the production of inert clay agglomerate, particularly since the process does not need a special plant, but may be carried out in conventional kilns already employed for the production of the clay agglomerate.

## Claims

1. A thermic lithosynthesis process for disposal of liquid and solid industrial wastes in the production of inert clay agglomerate, characterized in that it consists of:
   i) a cold working step including:
   a) milling of clay into granules;
   b) mixing said clay granules with industrial wastes, such as emulsioned and/or exhausted oils, organic substances ecc.
   c) laminating and maturing said granules to obtain a homogeneous paste;
   ii) a warm working step including:
   a) heating said paste to evaporate the water content and to obtain granulated material;
   b) heating said granulated material to expand the inner portion and attain a glassy outer layer of granules;
   c) cooling said expanded granules.

2. A thermic lithosynthesis process as claimed in claim 1, wherein said warm working step is performed in a plant having at least one kiln heated by at least one burner actuated by conventional fuels and/or by exhausted and/or emulsioned oils.

3. A thermic lithosynthesis process as claimed in claims 1 and 2, wherein said warm working step is performed in a plant having a first rotary kiln heated by a burner actuated by conventional fuels, in countercurrent to the clay paste flow to evaporate the water content thereof and obtain an evaporated granular material, which is introduced into a second rotary kiln for baking and expanding said granules by burners arranged at both ends of said second kiln and actuated by conventional fuels and/or exhausted and/or emulsioned waste oils, the expanded granules with a glassy outer layer being introduced into a third kiln, cooled therein and discharged therefrom as a granular product adapted to be used for manufacturing cements and concretes.

European
Patent Office

**EUROPEAN SEARCH
REPORT**

Application Number

**EP 90 83 0375**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 150 993 (Ed. ZÜBLIN)<br>* Claims 1,2,5,9,13; page 13, lines 16-18 * | 1,2 | C 04 B 18/02<br>C 02 F 11/14 |
| Y | | 3 | |
| | – – – | | |
| Y | US-A-3 037 940 (F.V. PIXLEY et al.)<br>* Fig.; column 3, lines 34-37,50-55; column 4, lines 17-23 * | 3 | |
| | – – – | | |
| X | US-A-4 872 993 (J.C. HARRISON)<br>* Abstract * | 1 | |
| | – – – | | |
| X | GB-A-2 133 000 (Ed. ZÜBLIN)<br>* Abstract * | 1 | |
| | – – – | | |
| A | DE-B-1 137 989 (VEIT DENNERT)<br>* Claim 1; column 5, lines 22-24; figure 1 * | 1,3 | |
| | – – – – – | | |

| | TECHNICAL FIELDS SEARCHED (Int. Cl.5) |
|---|---|
| | C 04 B 18<br>C 04 B 20 |

The present search report has been drawn up for all claims

| Place of search | Date of completion of search | Examiner |
|---|---|---|
| The Hague | 10 April 91 | DAELEMAN P.C.A. |